# EUROPEAN PATENT APPLICATION

(11) **EP 1 117 055 A2**
(43) Date of publication of application: **18.07.2001**
(21) Application number: 01300195.3
(22) Date of filing: 10.01.2001
(51) Int. Cl.: G06F 17/60

(54) **Product selection system**

(30) Priority: 11.01.2000 GB 0000547
(71) Applicant: Intellident Limited, Beaconsfield, Bucks HP9 1PB (GB)
(72) Inventor: Hankins, Timothy Glyn, Chesham Bois Amersham Bucks HP6 5QF (GB)
(74) Representative: Jehan, Robert

(57) **Abstract**

A product selection system for advising a user whether or not to select a product or service, such as a food product, includes a product database (200) comprising data on a plurality of products, a hand-held barcode reader (106) for identifying a product, and processing means (206) for identifying whether the product has one or more user selected characteristics of the product. The characteristics may include the method of treatment or manufacture of the product, distance the product has travelled from origin, place of origin, politics of the region of origin, type of labour used in manufacture or production, details of the manufacturer or supplier, health risks, public health warnings associated with the product, special offers and the like.

## Description

The present invention relates to a product selection system for use, for example, in supermarkets, museums, libraries, visitor attractions, shops and the like.

Supermarket customers are today presented with an enormous range of different food products. For many of the products on sale, such as fresh vegetables, fish, and meat, the content and nature of the food is obvious and easy to identify. If a person is allergic or simply wishes to avoid these types of foods, this can be done easily.

Many food producers now include a nutritional information table on the packaging, in anticipation of a legal requirement or for commercial reasons. All the tables contain four basic items of information. The first is normally the number of calories in each 100g portion, followed by the amount of fat, the amount of protein and the amount of carbohydrate. Since each figure is provided in grams per 100g portion, the customer can compare the figures directly with other products. The nutritional information provided can then be used by customers to count the calories they are buying for dieting or for medical conditions, and/or reduce their intake of individual items such as saturated fat or salt.

Systems are known for informing a user of the ingredient content of a product.
However, prior art systems are either limited in their use by being limited to the information given to the user or may be expensive, bulky or impractical due to the amount of memory space required to store information on many products.

US-A-5478989 discloses a system for generating personalised nutritional information which includes means for inputting personal data relating to an individual, a barcode reader for inputting data identifying at least one food product, a processor for correlating the personal data with prestored nutritional data pertinent to the food product, and means for outputting information to the person based on the correlation. The prestored nutritional data may include information relating to allergy warnings, pesticide levels and the names of individual stores which carry the foods.

US-A-4780599 discloses the use of a hand-held barcode reading device to retrieve product information for users. FR-A-2702583 discloses the use of a hand-held barcode reader which is used to make purchasing decisions based on the price of selected products.

WO-97/46960 discloses an improvement over these prior art systems by the applicant of the present application.

The present invention seeks to provide an improved product selection system.

According to an aspect of the present invention, there is provided a selection system for advising a user whether or not to select a product or service, including a processing unit comprising a product or service database including product and/or service data on a plurality of products or services, selection means for selecting a particular product or service listed in the database, and remote user means operable by a user for identifying a product or service and for indicating to the user the suitability of the product or service on the basis of one or more predetermined user preferences, the remote user means including transmitting means operable to transmit at least the product identifier to the processing unit for processing therein.

In the preferred embodiment, all processing of data is carried out in the processing unit, with the remote user means acting as a "dumb" terminal. In this manner, the remote user means need not have large processing capacity or a large memory for storing a database. Preferably, the processing means includes database management means operable to generate a sub-database specific to each user using the system. The sub-database can reduce processing time by reducing the amount of data which must be analysed to advice a user on his/her particular choice of product or service. The sub-database can be permanent or temporary. When temporary, it can be generated each time a specific user registers onto the system.

Identification of the user can be performed in a variety of ways. Two preferred ways are to transmit from the remote user unit a user identification each time a product identifier is transmitted. This example is useful in cases where the remote user unit is a kiosk, home based device or the like.

An alternative system provides a handheld remote user unit which is carried by the user around, for example the shop. In this case, a user can be registered in the processing unit for that handheld unit, such that it is only necessary to transmit a remote unit identifier to identify the user and hence gain access to the user preferences.

In the preferred embodiment, the product or service data includes predetermined characteristics of each product or service, one or more of said characteristics being unrelated to the content of a product or service.

In an embodiment, the product characteristics include one or more of: method of treatment or manufacture, distance product has travelled from origin, place of origin, politics of region of origin, type of labour used in manufacture or production, details of manufacturer or supplier, health risks, public health warnings associated with the product, special offers.

Preferably, the system is arranged to make a decision for a user as whether or not to selected a product or service. The system may include means to explain to a user the reasons for the decision based upon selected product or service characteristics.

The remote user unit may include barcode or microchip, tag or smartcard reading means for identifying a selected product from a barcode thereon. The remote user unit may additionally or alternatively be provided with reading means for reading a product identifier other than a barcode. Such identifiers may be a code, the product name, a number or any other suitable identifier.

In an embodiment, the system includes user monitoring means for monitoring products considered for purchase by a user.

According to another aspect of the present invention, there is provided a user portable device for advising a user whether or not to select a product or service, including identifying means for identifying a product or service to be tested, and transmitting means for transmitting to a remote processing unit the product or service identifier and either an identifier related to the portable device or to the user of the portable device.

The following description is directed to the selection and purchase of food products. However, the system could be used for many other applications, including, for example, directing users around a museum, gallery, library, any shop, and so on, on the basis of predetermined user interests.

There are customers who wish to buy certain types of foods, but they may avoid the food product altogether for political or lifestyle reasons, simply because information on the product is not readily available to them at the point of selection. Examples of types of customers interests, amongst others, are:-
- Chemically treated produce,
- The number of miles the food has travelled,
- The politics of the country of origin,
- The use of child labour,
- Blacklisted companies,
- Foods avoided for religious reasons,
- Public health warnings, such as recent concerns over eggs and British beef,
- Special offers
- Foods or Products regularly purchased or selected on previous visits.

In addition to these basic types of foods, there is an ever increasing number of processed and treated foods which are available today, where it is difficult for customers to identify quickly any individual concerns they may have over a product. This may be due to the fact that the information is simply not on the packaging, or it is listed by an unfamiliar name.

Food producers are obliged by law to list the ingredients of a packaged food product on the packaging of the product in descending order of weight. Since there are presently no legal requirements to list the amount of any ingredient in a product, it is difficult for people who restrict their consumption of certain ingredients to purchase these foods with any confidence. Moreover, there is no legal requirement for listing ingredients for alcoholic beverages (wine, beer etc.) which can also contain colourings and preservatives. Food additives are referred to by their E number or by chemical or common name, some of which may mean very little to the average customer.

It is also accepted that food producers will use their food packaging to sell the product, and unless there is a commercial or goodwill reason for highlighting a customer concern, such as low calorie foods, organic produce etc., it is unlikely to be placed on the packaging in a prominent position, the text is often in a small character size, and due to the different size and shapes of the packaging, the information may be difficult to find.

The present invention can cater for such situations and can thus provide a system which is more useful.

An embodiment of the present invention is described below, by way of example only, in which:
Figure 1 is a schematic diagram of an example of hand-held scanner and database;
Figure 2 is a schematic flow chart of a simple version of food product selection system;
Figures 3 to 5 are schematic diagrams of embodiments of an overall system intended for use in food supermarkets;
Figure 6 shows the principal components of an is an embodiment of central processing system;
Figures 7 to 11 are examples of software items for both the central processing system of Figure 6 and for the hand-held reader of Figure 1.

The preferred embodiment is described with reference to the selection of food products in a supermarket. However, it will be immediately apparent from the disclosure herein that the system can be used in other applications where a user wishes advice on the basis of his/her preferences or lifestyle. For example, the system could be used in a museum-type environment to provide the visitor with an indication as to whether any particular exhibit would be of interest and even, where desired, with details of that exhibit, preferably tailored to the visitor's given preferences or lifestyle.

The examples of system described below are intended to use machine readable identifiers on food products and the like in order to determine predefined ingredients of the food products on a shop shelf and other aspects of the products, such as origin, method of manufacture and the like. The system is ideal for use by customers and organisations interested in identifying calorific values, potential allergic reaction, diabetic problems, other preferences based on lifestyle and so on. The preferred embodiments have been primarily designed for use at the point of selection of food products in supermarkets, where customers can find out quickly whether a food product sought to be purchased contains ingredients which may cause harm or which it is wished to avoid for lifestyle or special dietary reasons.

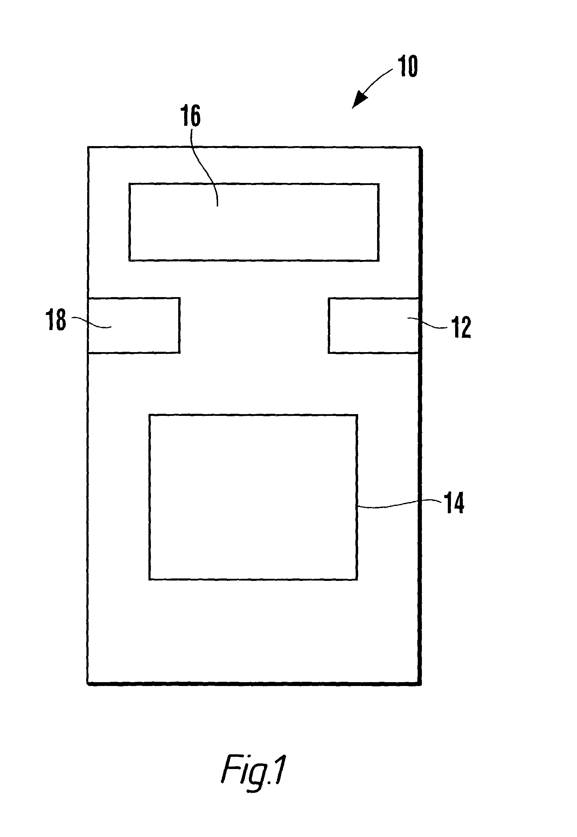

Referring to Figure 1, the example of scanner system 10 shown is intended for use by a customer in a supermarket or the like. The system is used to determine and warn of chosen ingredients which the user should or should not consume, as is described in further detail below.

In the embodiment shown, the system 10 is designed to operate on the basis of barcodes provided on packaged foods. For this purpose, the system 10 includes a barcode scanner 12, shown only in schematic form, which is able to read the barcodes on food products under the control of a control system (not shown), such as a microprocessor. Since food products are barcoded on the basis of the European Article Numbering System, such as
EAN13 and EAN8 or a derivative thereof, the actual product can be identified from the barcode, irrespective of the shop or food manufacturer.

The system 10 is provided with an input unit 14, which may be of any suitable form, such as an alpha/numeric key pad. A display 16 is also provided, which again may be of any suitable form such as a liquid crystal display or equivalent. The display 16 provides data input information and results of the determination of a particular food product.

Additionally or alternatively, the system 10 may include an acoustic indicator such as a loudspeaker or buzzer to inform the user of the results of its determination of a food product. Similarly, instead of displaying the results on a display such as the display 16, the system 10 may be provided with any other suitable visual indicator, such as one or more LEDs.

The system includes a transmitter 18 for transmitting to a central processing unit (described below) the product identifier and a user identification code. The user identification code may either be specific to the user or related to the unit 10 itself. In the first example, the unit 10 may also be provided with means for receiving a user identifier, such as a card reader for reading a user loyalty card or the like or to receive a user code such as a personal identification number (PIN) via the key pad 14. In the second alternative, the user could be registered when collecting the unit 10 such that an identifier specific to the unit 10 can be correlated with the user registered to use that unit. These alternatives are described in further detail below.

The central processing system includes a database (not shown) which is accessed on the basis of the barcodes. The database includes, in the preferred embodiment, a description of the product, for assisting the user, and data relating to the ingredients of the food product. The database may include all the ingredients of each product or only those most likely to be of interest to the user, such as those causing known allergies, those not suitable for people with certain illnesses such as diabetes, and those having "unacceptable" calorific value or fat content. The ingredient data could be stored as code designators which are translated into their actual ingredients for versions where the actual ingredients are notified to the user.

The system could also or in the alternative provide for ingredients which the user should consume, for example for dietary reasons. These may, for example, be iron for a user suffering from anaemia.

For either purpose, the system may be set to take into account ingredient quantities rather than just ingredient presence.

The nature and possible content of the database are described in further detail below.

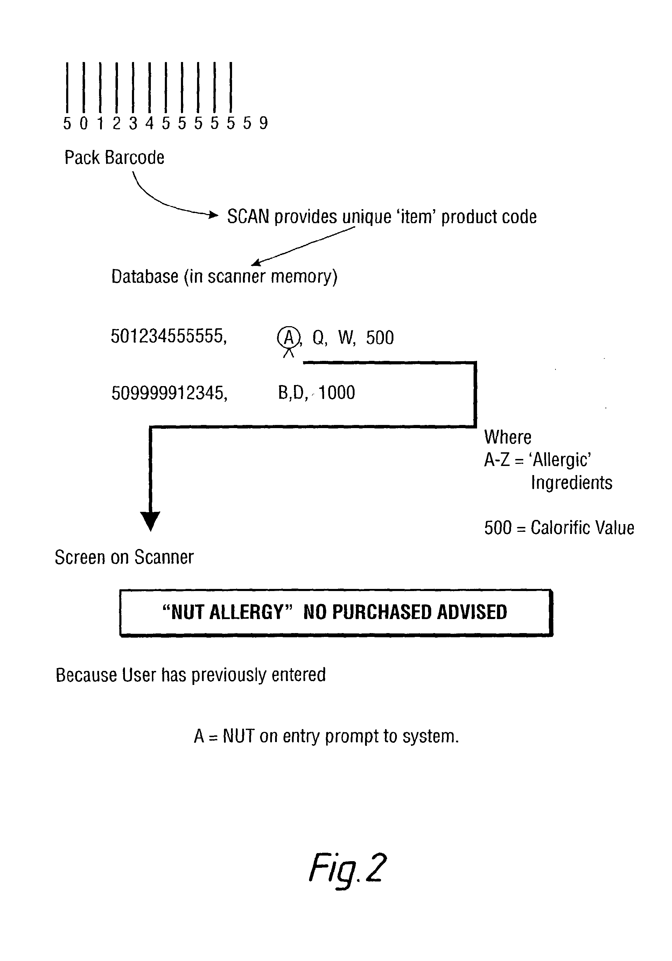

An example of method by which the unit of Figure 1 may operate is described below with reference to Figure 2. This is a simple implementation and the reader is referred to the more detailed example described below.

In summary, in the method of Figure 2, the central control and processing unit receives the product identifier and second identifier from the handheld unit 10 and from this decodes the barcode, looks up the appropriate database record and transmits back to the unit 10 information for display or acoustic or visual indication, as to whether it is safe or wise for the user to purchase that food product.

The warning given by the system 10 could be a simple yes/no warning or more specific information as to the particular food product, for example quantity of the ingredient in the product. In the embodiment shown in Figure 2 the system 10 is designed to give a simple yes or no indication as to the existence of the ingredient in the food product tested and calorific data.

The system 10 can advise the user of any product containing "unacceptable" ingredients to the user and the system may be capable of printing a hard copy version of all products selected and/or the total calorific value of the products selected.

In the specific example of Figure 2, the user has programmed into the system an allergy to nuts. When the barcode of the food product having barcode 5012345555559 is scanned, the central control and processing unit accesses the database at a location equivalent to barcode 5012345555559, at which the database has ingredient codes A, Q, W and a calorific value for the product of 500 (preferably normalised to a predetermined product quantity). In this example, ingredient code A refers to nuts, so the system transmits to the handheld unit 10 data to display on display 16 the message "Nut Allergy - No Purchase Advised".

It is envisaged that the sample system described above would be used in other applications, for example to warn the user of particular ingredients, nature or origin of a product.

It will be apparent that although the system 10 would normally be software controlled, it could be designed primarily on the basis of hardware components.

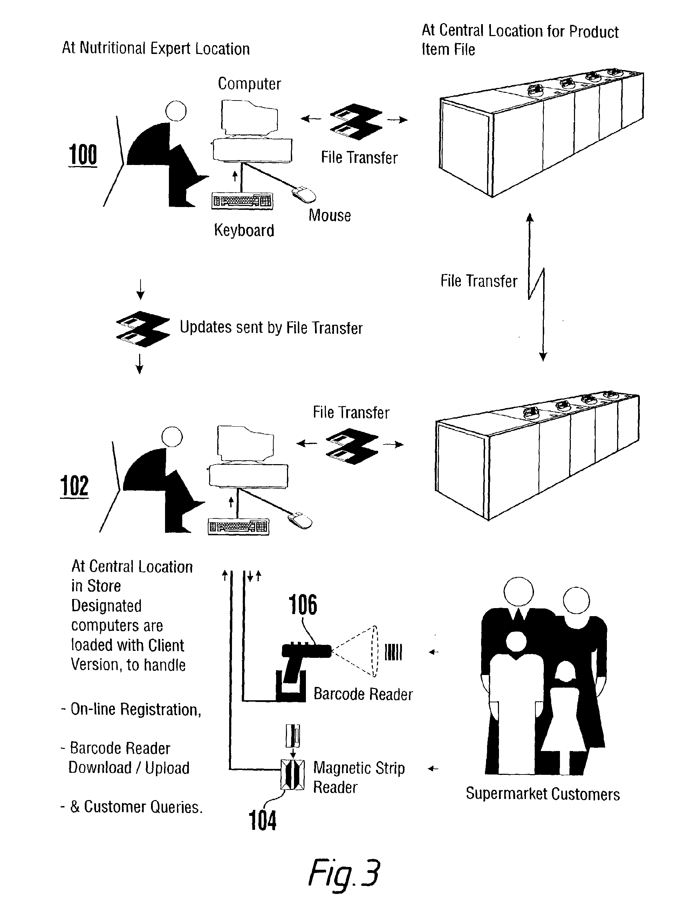

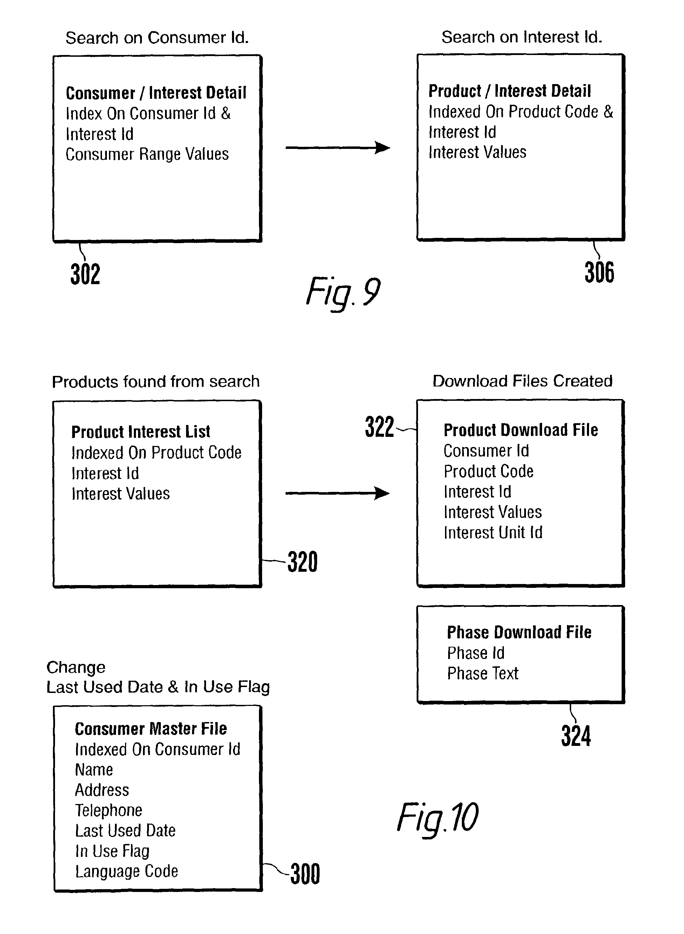

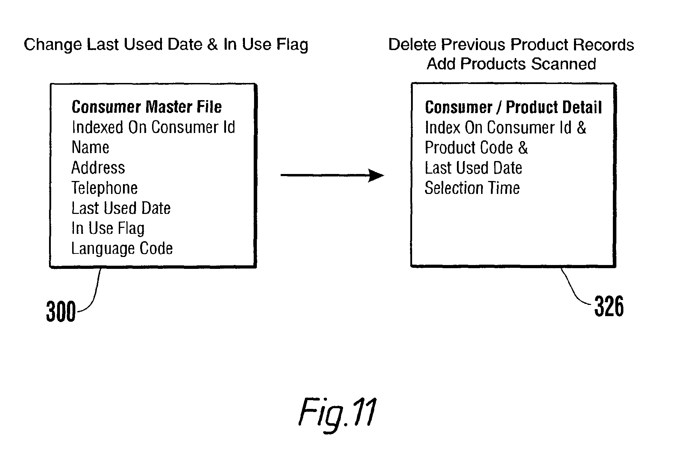

Figures 3 to 11 give more detailed examples, which include additional features of the preferred embodiments.

The examples described below provide a system to complement any dietary or avoidance plan by giving a customer the ability to check any individual product in a supermarket against their special interests to see if it contains ingredients or amounts which are inadvisable to purchase. It can also be used to make requests for more information on any of the products in the supermarket. This can be achieved while the customer is walking around the shop using a product identifier system such as that shown in Figure 1.

### Summary of System Operation

Before using the system for the first time, the customer must be registered, for example through a loyalty scheme with the supermarket, to provide their personal details, and to identify uniquely that person. Registration is preferably by computer data input, in which the customer is provided with a number of computer screens to describe special interests such as allergy details, dietary wishes or requirements, religious dietary requirements, political preferences, food manufacturing preferences, food origin preferences and so on. Supermarket staff could, alternatively enter such data either with the customer or at a later point in time.

### (i) Step 1

Once the customer has been registered, they can collect a scanner from a central location in the shop. At the central location, they will be asked to swipe or insert their account card into a magnetic strip reader, which will identify the customer from the account number on the magnetic strip of the card. Once the number is received, the main system software will generate a sub-database of product information related to that user for subsequent access when checking products. The sub-database is preferably temporary in nature, that is provided only during each period of use of the system by that user, but may be permanent in some applications. It is not necessary to generate a sub-database but it has been found that this can considerably increase processing speed when checking a product.

### (ii) Step 2

The customer simply scans the barcode of the product of interest as he/she progresses through the shop. Once the barcode has been scanned, the scanner will transmit the product barcode and the user or scanner identifier to the central processing unit which will, in turn, check the product details held in it's memory to see if it is listed in the customer's predefined interests. If it is not, the system will log that it has read the product barcode and report to the customer via the handheld unit 10 that no relevant information is available. If identified, the scanner 10 will report to the customer in either visible or audible form if it is inadvisable to purchase the product because it contains ingredient(s) which they have identified to avoid, or if the product is not desired for any other reason. The system is preferably designed to explain, for example by means of scrolling text, the interest that was found and any ingredient amounts required.

### (iii) Step 3

The scanner is then returned to the central location point. The scanner can then be uploaded to inform a central processing system who has returned the scanner. Once the scanner has been returned to the central system, the customer can leave or pass to a point in the shop to obtain more information on the products scanned. Supermarkets can provide this information through dedicated computers and printers, or by appending the information to receipts printed at the checkout.

### System Overview

The following overviews introduce the preferred designs of central processing system and of programming/access methods, in terms of the connection between product components, the use of equipment and the interaction with people. The relationships are shown as the product may be used in three different implementation plans shown in Figures 3 to 5 inclusive.

### 1.Stand-alone Central Client System

In the first implementation, shown in Figure 3, the supermarket chooses to implement the system on stand-alone computer equipment, with little or no direct connection to other computer equipment or other database software. This may be because only mainframe technology is deployed in shops, with little or no PC connectivity.

At the location of the supermarket's nutritional expert, a central processing system is installed on a stand-alone computer 100. The computer 100 will have a version of the software and the computer database files required to maintain the food product details, a complete list of customer interests, the layout and design of a customer questionnaire. Communication with other computers will be made by file transfer. Although floppy diskettes are shown for file transfer, any of the other established methods of file transfer may be employed by the supermarket company. Example methods which may be used is transfer through existing mini-frame links between shops, e-mail or other Internet system and so on.

At each shop, one or more client versions 102 of the central processing system are installed in a central location on computers of a similar type to the one used by the nutritional experts. In addition to the use of the keyboard and pointing devices used by the nutritional expert, the client version supports the use of magnetic strip readers for customer account cards or loyalty cards, and connection to mounted barcode readers.

At both the location of the nutritional expert, and the central location in a shop, supermarket staff can modify the set-up of the software, and view or edit the database information through a series of visual display screens in the client version 102. Access to these screens may be restricted by password, and the use of a keyboard. Supermarket staff can then address queries made by customers and edit their customer interests immediately.

Alternatively, when a customer enters the shop and swipes their customer account card through one of the readers 104 in a shop, a visual display and pointing device can be used to select their own customer interests, the first time they use the system. This involves the validation of the card, followed by check to see if they have used the system before. If it is the first time, the client version presents a number of questions on a visual display for the customer to select with the pointing device.

Once they have selected at least one customer interest, the client version 102 of the central processing system will select a docked barcode reader 106 and will generate a sub-database of the products that are of interest to that customer only. This reduces the list of products so it will fit on the amount of memory on the reader, and reduces the initial download time. After preparing the products of interest for the customer for the first time, the software employs techniques to store and maintain permanently the list for the next time the customer uses the system.

Once freed from it's docking station, the barcode reader 106 uses loaded software to respond to any barcode read by the customer to transmit to the central processing system 100 the product barcode and user/unit specific identifier. Interaction between the system 100 and barcode reader is as described above.

When the barcode reader 106 is returned to a docking station, the client version software will generate a list of products scanned by the customer, for analysis within the supermarket, and for immediate reference should the customer have any queries. A further function can be provided in the software to print a detailed report of the nutritional information and customer interests associated with the products scanned by a customer.

### 2.Networked Central Client System

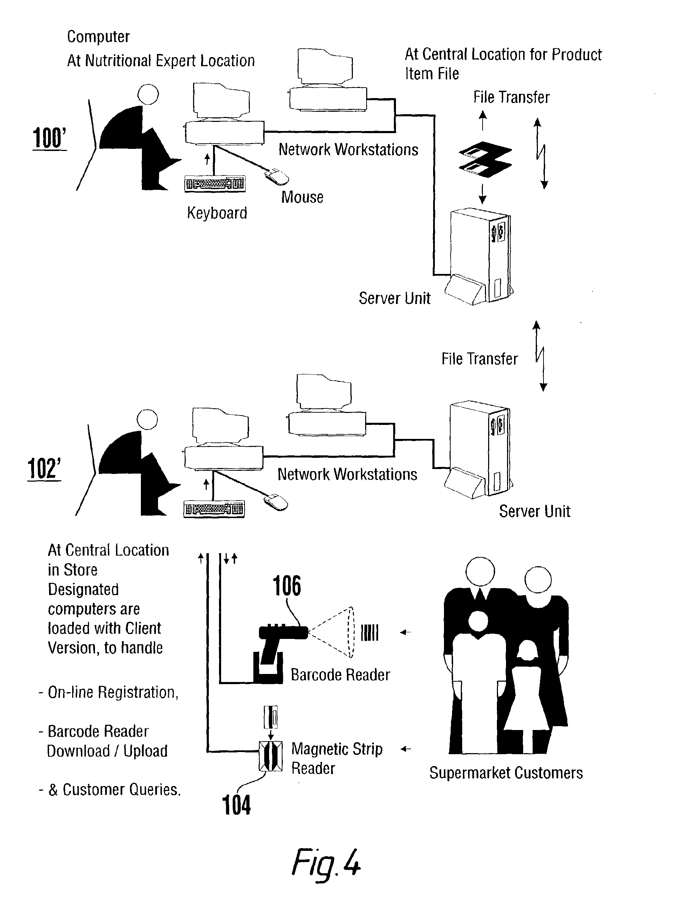

In the next example of system, shown in Figure 4, the supermarket chooses to implement client versions 102' on computers connected together in a local area network in the shop. Each client version shares the same database files for processing customer requests in the shop. Connection to a central database site or other sites is administered outside of the system. In this implementation, the extraction of information from system files, and the import of information into its files, is performed as part of a scheduled batch process by other application software used in the shop.

### 3.Server System

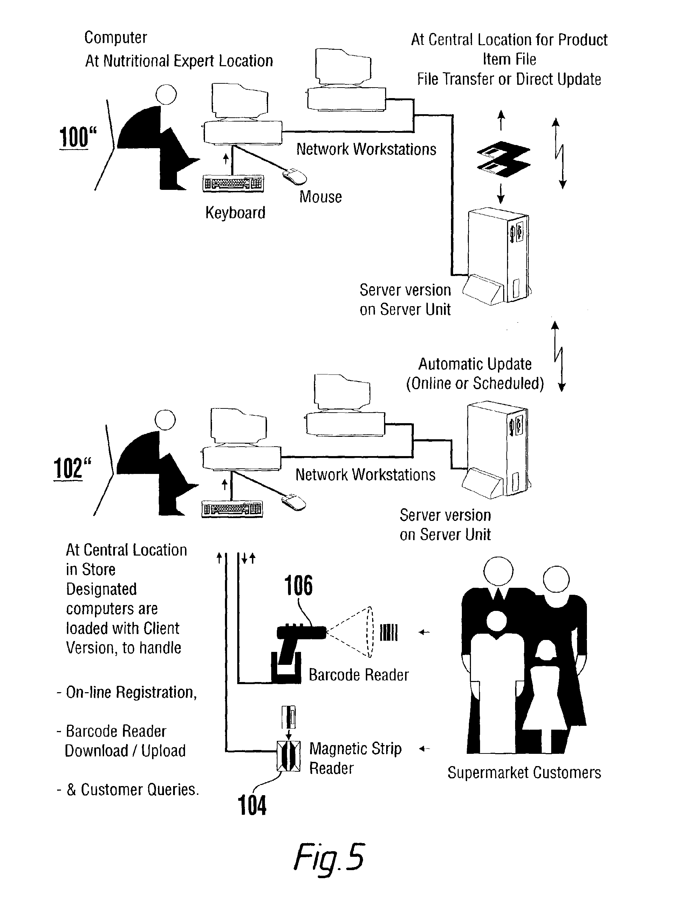

In the third example, shown in Figure 5, the supermarket chooses to implement client versions 102" on computers connected together in a local area network. Each local area network in a shop is also connected to other local area networks by dial-up phone access or by dedicated lease lines. Client/Server software is already deployed to manage the transfer of data from one site to another. In this case, a server version 102" is installed on an application server in the shop, to send and receive information automatically between sites, and to maintain the database files in the shop for other client versions or components. Known advanced database file replication techniques can be used to distribute information, if Oracle(™) or latest versions of Microsoft SQL Server ^{(™)} are deployed.

### Product Component Design

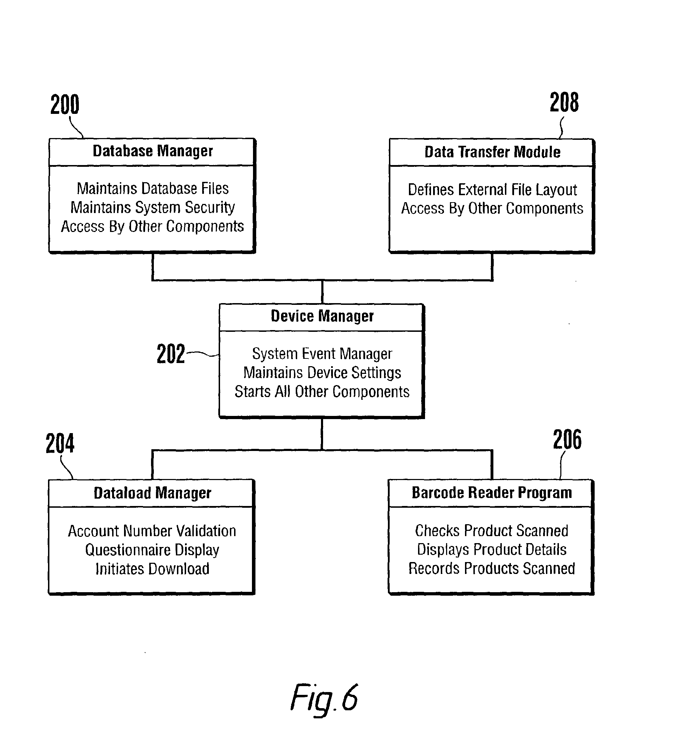

The individual product components of the preferred embodiment can be stated with their role and relationship between each other. Reference is made to the block diagram of Figure 6 which shows the principal product components.

### (1) Database Manager 200

Software provides permanent records of customer interests, product details and software settings for fast and quick access at critical points in the use of the system. This product component is used by the nutritional experts in the supermarket company to set-up the information in the first place, and to maintain the information when required. It provides the set-up of access rights to the information for other staff using the system, since security may be an important issue for the supermarket company. It also provides the set-up of database parameters for the support of different database file formats and methods of access expected by each supermarket company.

It is envisaged that the product component will consist of a number of visual look-up database tables, with selection buttons on screen to view, edit or delete individual records in each of the tables. In one of the displayed forms, the operator is able to select the type of database file format for the tables, the OEM parameters for accessing the files, and the system passwords which provide functional access.

In addition to the visual forms, there will also be a library of function calls to read and write the database information to and from other product component software. In this way, each other product component does not need to know the specific details of the database tables used, and changes made to the database structure will only need to be carried out in this Product Component.

When a customer uses the system for the first time, a sequence of visual forms may be used so that the customer can select their human interests. This product component will also provide for the set-up and layout of the forms displayed to the customer, since the content of the forms will be decided by the supermarket company.

In the design of the database, special care is taken not to limit the number of human interests which may be stored against a product and the number of human interests that the customer can select, moreover the supermarket is able to define the human interests and specific order of displayed interests in the database without cause to change the software. Each human interest can contain a range value or values to be displayed to the customer.

The term "human interests" is intended to denote more than just product ingredients.
For example, the range of human interests for a particular customer may include allergies to one or more particular food ingredients, desire to avoid or have particular ingredients or type of ingredient, such as carbohydrates, fats, sugars and the like. It may also include foods prepared according to certain religious or other dietary criteria, such as Kosher, vegetarian, vegan foods and the like. "Lifestyle" interests may include foods of particular origin, production methods, foods which are the subject of health questions such as salmonella or BSE. The intention, thus, is to provide more than just an indication of composition of the food product by ingredients.

Care is taken in the design of the database to optimise the speed of retrieval of product details at the point of download to the barcode reader 106. Given the potential for international sales of the system, the method used to store text in the database makes it easy to provide information for multi-language display in all product components.

In order to use the application database manager 200, the operator is provided with a keyboard and pointing device, or access to the information through another product component. Information stored using this product component will be in proprietary database file format, or Windows ^{(™)} configuration file format (.INI files). When a member of staff runs the client or server version of the system, this product component will be loaded into computer memory, ready for use. More specific details of the Database Manager are given below.

### (ii) Device Manager 202

Software provides the set-up of hardware/software component parameters for the smooth implementation of the system with different expected requirements for barcode readers, magnetic card readers, computers, visual displays, printers and operating systems. Although a Windows ^{(™)} operating system will provide direct support for many computer devices, special software may be needed to manage the communication and set-up of barcode and magnetic card readers, using for example the ASYNC Plus 2 ^{(™)} software library (produced by Turbopower Software Company, 4775 Centinnal Boulevard, Colorado Springs, CO 80919, U.S.A.).

It would also be advisable to provide functions within this product component to recognise automatically all the devices on the workstation/server, and to record their details, so that this can be provided to other product components which require the same information. It is envisaged that the device manager 202 will consist of a number of visual forms which list the devices on the workstation/server and their settings. When experiencing problems with a device, an operator can use this product component to adjust the settings of the device in the list displayed to resolve them. It will also provide the front screen for the system from which an operator can start all other product components residing on the same computer. It also manages the processing time given to each of the product components.

In order to access the device manager 202 settings, the operator is provided with a keyboard and pointing device, and an appropriate password provided by the database manager 200.

When a member of supermarket staff runs the client/server version 102 of the central processing system, this product component is loaded into computer memory, it displays the visual front screen to the system and it loads the database manager 200 into computer memory.

### (iii) Dataload Manager 204

Software is provided to manage the interaction of the customer with the system at the point of entry into the system and at the point of return of the barcode reader 106. When a customer enters into the system, the dataload manager 204 validates a customer's account number, passed to it by a magnetic card reader, decide whether to present the customer with a questionnaire, if it is the first time he/she has entered into the system, and subsequently manages the download of product details to the barcode reader 106, ready to take around the shop.

When the customer returns a barcode reader 106 to a cradle or dock of the system docking station, the dataload manager 204 generates the final list of product codes scanned by the customer so that a permanent record can be made of the entries made by the customer, for any queries the customer may have and for market research purposes. Each time, the dataload manager 204 receives an entry from a customer, the customer account number is used to identify the use of a specific barcode reader 106, so that at the point of return, the dataload manager knows which customer is returning the barcode reader 106. In this way, a list of current barcode readers 106 in use can be maintained in the dataload manager 204, and the system can cope with the use of more than one device in the shop.

The dataload manager 204 calls the database manager 200 and device manager 202 to perform database access and device communication. In this way, the dataload manager will be device independent, and should the database or devices change, then the dataload manager 204 will not need to be changed. It is envisaged that the dataload manager will consist of a number of entry forms for multi-language display and filling in a questionnaire, and the display of account card recognition, download progress and any background marketing information required for promotions on a visual display unit.

While waiting for customers to fill-in questionnaires, or displaying marketing information, the dataload manager 204 will monitor barcode reader returns, and upload the product codes scanned by the customer using calls through the device manager 202. It will then write the information to database tables with the customer account number using the database manager 200.

Both the filling-in of the questionnaire and the display of progress and the like are options which can be switched-off. This allows dedicated network computers to be used for the dataload manager 204, and other network computers to be used just for entering and displaying information. It is envisaged that these options can be decided per installed copy of the system in the device manager against the visual display parameter options. In order to use the dataload manager 204, the operator will require a magnetic card reader and a barcode reader. A pointing device will be required to start the dataload manager, and to use the visual display elements, if they are switched on.

The dataload manager 204 is not loaded into computer memory until selected by the operator from the front screen displayed by the device manager 202.

### (iv) Barcode Reader Program 206

In order to drive the barcode readers 106, a specific program is provided for each unit. The program resides on the barcode reader 106, with the purpose of managing the download and upload of data to the device manager of the system. Using the program on the reader, the customer can scan product barcodes which are then transmitted to the central processing unit to find out whether the products are inadvisable to purchase given their human interests, or whether there is no relevant information for the products. Although the system has been designed to highlight allergies, special diets and lifestyle choices, the supermarket may define many other topics of interest such as special offers and the like. When human interests are found for a scanned product, the program 206 scrolls the text for interests in the display of the barcode reader, until the customer performs another action on the reader. An initial audible tone is given if available on the reader 106 when a selected product is inadvisable.

In order for the program 206 to provide product information to the customer, it stores in the sub-database a product item file and just the details of those products which are of interest to the customer. In this way, the amount of memory used is reduced to a minimum. Further use of a file containing all the text to be displayed in a specified language reduces the amount of memory used, and the two techniques combined also reduce the time taken to download information into the barcode reader 106.

In order to keep a track of who is using which reader, the customer account number is associated linked to the reader by a flag in the system's memory. The program 206 is automatically started when the barcode reader 106 is turned-on, and after the barcode reader operating system is loaded.

### (v) Data Transfer Module

This component manages the flow of information to and from external database sources of information. It is recognised that for many supermarkets, there is already nutritional information and product item details stored and maintained in other computer systems. In the initial set-up of database information, and thereafter to lesser extent, it is envisaged that software is required to import and update product and customer information electronically.

The Data Transfer Module 208 provides visual display forms to the operator to define the layout of information in external data sources to the system. It also provides the ability to schedule the import of this information. Likewise, the module can use the same layouts to schedule the export of information from the database files maintained by the system. When an import or export job is defined by the operator, the Data Transfer Module 208 writes the job details to the configuration file of the device manager 202 component.

At the appointed time of a data transfer job, the device manager 202 component will call functions in the database manager 200 to import or export the information required. As the dataload manager 204 may be loaded at the same time, the device manager 202 carries out primary tasks in the dataload manager 204 first, until sufficient processing time is available to carry out an individual record read or write. In this way, data transfer jobs do not adversely effect dataloading to and from the barcode readers 106.

Connectivity to remote sites and all data sources are provided by the operating and networking software which the computer has loaded. Initially, selective criteria for imports and exports will be defined externally to the Data Transfer Module 208 by the source or target application software.

In order to use the Data Transfer Module 208, the operator is provided with a keyboard and pointing device with the appropriate password provided by the Database Manager 200.

It will be apparent that the system could make use of the Internet for data transfer. For example, the database could be Web or Internet based with "look ups" carried out through the Internet.

### Database Manager, Practical Example

The Database Manager of the preferred embodiment maintains all the database files used by the system and provides a number of visual forms on screen for an operator to maintain the files. It allows the operator to design the layout of a customer questionnaire displayed on the screen when customers enter into the system for the first time. Using the questionnaire, the customer can select the food products he/she wishes to avoid. The Database Manager 200 also provides all the functions to the other software components described above to access and maintain database files and special formatted files used in creating the customer specific sub-databases.

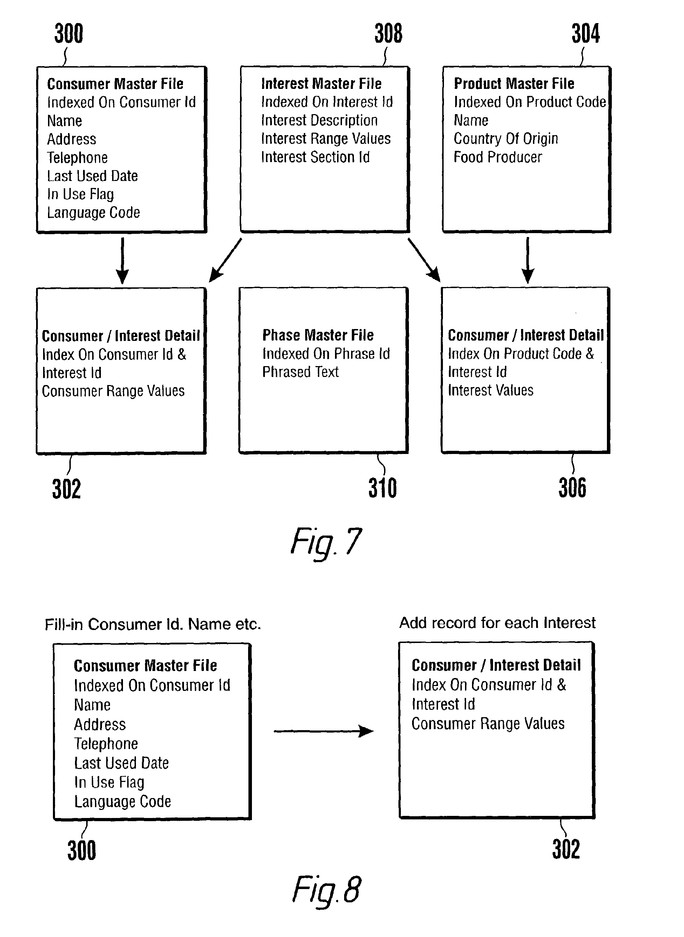

The preferred relational database structure maintained by the Database Manager 200, shown in Figure 7, allows direct access to any number of interests associated with a customer, and any number of interests associated to a product. Figures 8 to 11 show examples of other software items for both the central processing system of Figure 6 and for the hand-held reader of Figure 1. A full description of these items can be found in the applicant's earlier application WO-97/46960 the whole disclosure of which is incorporated herein by reference.

It will thus be apparent that the handheld unit 10 is a "dumb" unit which has no substantial processing capability. The unit 10 simply transfers data to the central processing system and displays data received.

The term "user identifier" used herein is intended to encompass possibilities other than the conventional Personal Identification Number. For example, it could be provided by a smartcard or other chip provider, an electronic tag, voice recognition system or any other person identification system.

It will be apparent that the communications link to the remote user means or user portable device is preferably a wireless link, such as a radio frequency link. However, the user portable device could also be designed to be used in the home with, for example, a link-up to a remote computer such as a shop computer via modem or the Internet. The flow of data and design for such as system will be immediately apparent to the skilled person from the teachings herein.

## Claims

1. A selection system for advising a user whether or not to select a product or service, including a processing unit comprising a product or service database including product and/or service data on a plurality of products or services, selection means for selecting a particular product or service listed in the database, and remote user means operable by a user for identifying a product or service and for indicating to the user the suitability of the product or service on the basis of one or more predetermined user preferences, the remote user means including transmitting means operable to transmit at least the product identifier to the processing unit for processing therein.

2. A selection system according to claim 1, wherein substantially all processing of data is carried out in the processing unit.

3. A selection system according to claim 1 or 2 , wherein the processing means includes database management means operable to generate a sub-database specific to each user using the system.

4. A selection system according to claim 3, wherein the sub-database is permanent or temporary.

5. A selection system according to any preceding claim, including means operable to transmit from the remote user unit a user identification each time a product identifier is transmitted.

6. A selection system according to any one of claims 1 to 4, including means operable to transmit a remote unit identifier and means operable to correlate the remote unit identifier with a user identifier.

7. A selection system according to any preceding claim, wherein the product or service data includes predetermined characteristics of each product or service, one or more of said characteristics being unrelated to the content of a product or service.

8. A selection system according to claim 7, wherein the product characteristics include one or more of: method of treatment or manufacture, distance product has travelled from origin, place of origin, politics of region of origin, type of labour used in manufacture or production, details of manufacturer or supplier, health risks, public health warnings associated with the product, special offers.

9. A selection system according to any preceding claim, wherein the remote user unit includes barcode reading means for identifying a selected product from a barcode thereon and/or reading means for reading a product identifier other than a barcode.

10. A user portable device for advising a user whether or not to select a product or service, including identifying means for identifying a product or service to be tested, and transmitting means for transmitting to a remote processing unit the product or service identifier and either an identifier related to the portable device or to the user of the portable device.
